# EUROPÄISCHE PATENTANMELDUNG

(11) **EP 4 079 461 A1**
(43) Veröffentlichungstag der Anmeldung: **26.10.2022**
(21) Anmeldenummer: 22169292.4
(22) Anmeldetag: 21.04.2022
(51) Int. Cl.: B25J 9/00, B25J 5/02, B25J 9/12, B25J 9/10, B25J 5/04, B25J 9/02

(54) **ROBOTERANORDNUNG, FERTIGUNGSANLAGE SOWIE VERFAHREN**

(30) Priorität: 22.04.2021 DE 102021110203
(71) Anmelder: Manz AG, 72768 Reutlingen (DE)
(72) Erfinder: Freundt, Dr. Martin, 73732 Esslingen (DE)
(74) Vertreter: Negendanck, Matthias

(57) **Zusammenfassung**

Bei Robotern werden Linearachsen eingesetzt, um Verfahrbewegungen umzusetzen. Die Linearachsen arbeiten jedoch bekanntermaßen nicht ideal, sondern weisen praxisbedingte Nachteile, wie zum Beispiel Schleppfehler, Begrenzungen bei Beschleunigungen etc. auf. Ferner ist die Genauigkeit der Verfahrbewegung und die Anforderung daran stark applikationsabhängig und eine Kopplung zweier Antriebsmotoren regelungstechnisch anspruchsvoll.

Es wird eine Roboteranordnung 2 mit einem ersten Schlitten 1, mit einem zweiten Schlitten 7, vorgeschlagen, wobei der ersten und der zweite Schlitten 7 in einem ersten Betriebszustand unabhängig voneinander verfahrbar sind, mit einer Getriebeeinrichtung 15, wobei die Getriebeeinrichtung 15 ein erstes und ein zweites Eingangsorgan und ein Ausgangsorgan 16 aufweist, wobei das erste Eingangsorgan mit dem ersten Schlitten 1 und das zweite Eingangsorgan mit dem zweiten Schlitten 7 wirkverbunden ist und wobei die Getriebeeinrichtung 15 ausgebildet ist, bei einer Relativbewegung entlang der Achserstreckung A1 der Schlitten 1, 7 das Ausgangsorgan 16 in eine zweite Achserstreckung A2 zu verschieben, mit einer Steuerungseinrichtung zur Steuerung des ersten und des zweiten Antriebs 8, wobei die Steuerungseinrichtung ausgebildet ist, in einem zweiten Betriebszustand, wobei die Schlitten 1, 7 zumindest in einer Bewegungsrichtung miteinander momentengekoppelt sind, den ersten und den zweiten Antrieb 8 so anzusteuern, dass von dem einen Schlitten 1 auf den anderen Schlitten 7 ein Antriebsmoment oder ein Bremsmoment übertragen wird.

## Beschreibung

Die Erfindung betrifft eine Roboteranordnung mit den Merkmalen des Oberbegriffs des Anspruchs 1. Die Erfindung betrifft des Weiteren eine Fertigungsanlage mit der Roboteranordnung sowie ein Verfahren zum Betreiben der Roboteranordnung/Fertigungsanlage.

Bei Robotern werden Linearachsen eingesetzt, um Verfahrbewegungen umzusetzen. Die Linearachsen arbeiten jedoch bekanntermaßen nicht ideal, sondern weisen praxisbedingte Nachteile, wie zum Beispiel Schleppfehler, Begrenzungen bei Beschleunigungen etc. auf. Ferner ist die Genauigkeit der Verfahrbewegung und die Anforderung daran stark applikationsabhängig.

So offenbart die Druckschrift DE 10 2015 107 583 A1, die wohl den nächstkommenden Stand der Technik bildet, einen Positionierantrieb sowie ein Verfahren zum Positionieren. In der Einleitung der Druckschrift sowie bei dem Gegenstand der Druckschrift wird auf Möglichkeiten eingegangen, zwei unterschiedliche Positionierantriebe miteinander derart zu koppeln, dass aufgrund einer Vorspannung eine höhere Positioniergenauigkeit zwischen den Positionierantrieben erreicht wird.

Es ist eine Aufgabe der vorliegenden Erfindung, eine Roboteranordnung vorzuschlagen, wobei die Roboteranordnung verbesserte Funktionseigenschaften aufweist.

Diese Aufgabe wird durch eine Roboteranordnung mit den Merkmalen des Anspruchs 1, durch eine Fertigungsanlage mit den Merkmalen des Anspruchs 12 sowie durch ein Verfahren zum Betreiben der Roboteranordnung und/oder der Fertigungsanlage mit den Merkmalen des Anspruchs 15 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Roboteranordnung, welche insbesondere zum Einsatz in einer Fertigungsanlage geeignet und/oder ausgebildet ist. Die Roboteranordnung kann auch als kinematische Struktur bezeichnet werden.

Die Roboteranordnung weist einen ersten Schlitten auf, wobei der erste Schlitten einen ersten Antrieb umfasst. Vorzugsweise trägt der erste Schlitten den ersten Antrieb oder zumindest Abschnitte davon. Insbesondere ist der erste Schlitten als ein selbstfahrender Schlitten ausgebildet. Der Schlitten kann durch den ersten Antrieb entlang einer ersten Achserstreckung verfahren. Vorzugsweise wird der erste Schlitten entlang der ersten Achserstreckung linear verfahren. Insbesondere bildet der erste Schlitten mit dem ersten Antrieb eine erste Linearachse.

Die Roboteranordnung weist einen zweiten Schlitten auf, wobei der zweite Schlitten einen zweiten Antrieb umfasst. Vorzugsweise trägt der zweite Schlitten den zweiten Antrieb oder zumindest Abschnitte davon. Insbesondere ist der zweite Schlitten als ein selbstfahrender Schlitten ausgebildet. Der zweite Schlitten kann durch den zweiten Antrieb entlang der ersten Achserstreckung verfahren. Vorzugsweise wird der zweite Schlitten entlang der ersten Achserstreckung linear verfahren. Insbesondere bildet der zweite Schlitten mit dem zweiten Antrieb eine zweite Linearachse.

Der erste und der zweite Schlitten sind in einem ersten Betriebszustand relativ zueinander entlang der ersten Achserstreckung verfahrbar. Insbesondere können der erste und der zweite Schlitten einen Zwischenabstand zwischen dem ersten und dem zweiten Schlitten variieren. Dabei ist es durchaus möglich, dass der Zwischenabstand konstruktiv und/oder mechanisch begrenzt ist.

Die Roboteranordnung weist eine Getriebeeinrichtung auf, wobei die Getriebeeinrichtung ein erstes und ein zweites Eingangsorgan sowie ein Ausgangsorgan aufweist. Das erste Eingangsorgan ist mit dem ersten Schlitten, das zweite Eingangsorgan ist mit dem zweiten Schlitten wirkverbunden. Die Getriebeeinrichtung ist ausgebildet, bei einer Relativbewegung der Schlitten insbesondere im Umfang des Zwischenabstandes entlang der ersten Achserstreckung das Ausgangsorgan in einer zweiten Achserstreckung zu verschieben. Vorzugsweise ist die zweite Achserstreckung senkrecht zu der ersten Achserstreckung ausgerichtet.

Die Roboteranordnung weist eine Steuerungseinrichtung zur Steuerung des ersten und des zweiten Antriebs auf. Die Steuerungseinrichtung ist insbesondere als eine digitale Steuerungseinrichtung, im Speziellen als eine digitale Datenverarbeitungseinrichtung ausgebildet. Beispielsweise ist die Steuerungseinrichtung als eine SPS (speicherprogrammierbare Steuerung) oder dergleichen realisiert.

Es kann vorgesehen sein, dass die Roboteranordnung weitere Achsen aufweist, wobei die Achsen in einer gemeinsamen kinetischen Kette mit dem ersten Schlitten und/oder dem zweiten Schlitten und/oder mit der ersten Linearachse und/oder mit der zweiten Linearachse angeordnet sind. Es ist jedoch auch möglich, dass die Roboteranordnung auf die erste und die zweite Linearachse begrenzt ist.

Im Rahmen der Erfindung wird vorgeschlagen, dass die Steuerungseinrichtung ausgebildet ist, in einem zweiten Betriebszustand, wobei die Schlitten zumindest in einer Bewegungsrichtung der Achserstreckung miteinander momentengekoppelt sind, den ersten und den zweiten Antrieb so anzusteuern, dass von dem einen Schlitten auf den anderen Schlitten ein Antriebsmoment oder ein Bremsmoment übertragen wird. "Momentengekoppelt" bedeutet insbesondere, dass die beiden Schlitten so miteinander verbunden sind, dass ein Momentenübertrag mittelbar über die Getriebeeinrichtung und/oder unmittelbar zwischen den Schlitten ermöglicht ist.

Es ist eine Überlegung der Erfindung, dass hochdynamische Bewegungen von Achsen oftmals durch die Antriebsmotoren der Achsen begrenzt. So ist es gerade bei Linearmotoren möglich, diese mit einer sehr hohen Leistung zu betreiben, dies kann jedoch gerade im Dauerbetrieb zu Wärmeproblemen bei den Linearmotoren führen. Ferner kann es zu Schwierigkeiten führen, wenn ein Elektromotor vergleichsweise groß dimensioniert ist, eine hohe Achsgeschwindigkeit zu erreichen, da aufgrund von elektromagnetischen Wechselwirkungen sich eine hohe Achsgeschwindigkeit und eine hohe Spitzenkraft widersprechen, da Induktionsverluste mit steigender Spitzenleistung zunehmen.

Somit wird im Rahmen der Erfindung ein Parallelantrieb der Schlitten für das Ausgangsorgan in der ersten Achserstreckung vorgeschlagen, wobei die beiden Schlitten, welche die Getriebeeinrichtung für das Ausgangsorgan tragen, durch zwei separate Antriebe in der ersten Achserstreckung angetrieben werden. Die Möglichkeit der Momentenkopplung eröffnet unterschiedliche Betriebsmodi:
So ist es beispielsweise möglich, dass in einem Beschleunigungsbetriebszustand nur der eine Schlitten den anderen Schlitten anschiebt, wobei z.B. der angeschobene Schlitten den eigenen Antrieb nur passiv oder mit verminderter Leistung mitlaufen lässt, so dass dieser z.B. abkühlen kann. In diesem Fall ist ein Eco-Beschleunigungsbetriebszustand gegeben. Alternativ hierzu können die beiden Schlitten mit der Antriebsleistung von beiden Antrieben bewegt werden. In diesem Fall ist ein Turbo-Beschleunigungsbetriebszustand gegeben. Ferner ist es möglich, dass in einem Bremsbetriebszustand der vordere Schlitten den hinteren Schlitten abbremst, wobei z.B. der hintere Schlitten den eigenen Antrieb nur passiv oder mit verminderter Bremsleistung mitlaufen lässt, so dass dieser z. B. abkühlen kann. In diesem Fall ist ein Eco-Bremsbetriebszustand gegeben. Alternativ hierzu können die beiden Schlitten mit der Bremsleistung von beiden Antrieben abgebremst werden. In diesem Fall ist ein Turbo-Bremsbetriebszustand gegeben.

Es ist auch möglich, dass die beiden Schlitten parallel, jedoch entkoppelt verfahren. Hierbei kann die Verfahrbewegung der Schlitten und damit des Ausgangsorgans sehr genau geregelt werden, so dass ein hochpräziser Lauf umgesetzt werden kann, insbesondere da die beiden Schlitten regelungstechnisch unabhängig betrieben werden können, insbesondere wenn die Getriebeübersetzung in diesem Arbeitspunkt so ausgeführt ist, dass diese die Relativbewegung zwischen den zwei Schlitten nicht oder in sehr geringem Maße in einer Bewegung des Ausgangsorgan umsetzt. Dieser Betriebszustand kann als Präzisionsbetriebszustand bezeichnet werden.

Daneben kann durch eine Relativbewegung der beiden Schlitten zueinander die Getriebeeinrichtung betätigt werden und das Ausgangsorgan in der zweiten Achserstreckung verschoben werden. Somit versorgen die zwei Antriebe wahlweise eine Bewegung in der ersten Achserstreckung oder eine Bewegung in der ersten und in der zweiten Achserstreckung.

Bei einer bevorzugten konstruktiven Realisierung der Erfindung weist die Roboteranordnung mindestens eine A1-Führungsschiene zum Führen von mindestens einem Schlitten und/oder eine Maßverkörperung, wie zum Beispiel ein Magnetstreifen und/oder einen Stator für den als Linearmotor ausgebildeten Antrieb auf. Es ist vorgesehen, dass der erste und der zweite Schlitten die A1-Führungsschiene und/oder die Maßverkörperung und/oder den Stator nutzt. Durch die Doppelnutzung von den genannten Komponenten können die Kosten der Roboteranordnung reduziert werden.

Es können dabei z.B. die folgenden, unterschiedlichen Konstellationen umgesetzt werden:
Beide Schlitten verwenden jeweils eine eigene Führungsschiene, eine eigene Maßverkörperung und/oder einen eigenen Stator.

Der zweite Schlitten wird von dem ersten Schlitten getragen, wobei eine eigene Führungsschiene für den zweiten Schlitten auf dem ersten Schlitten angeordnet ist. Beide Schlitten verwenden einen gemeinsamen Stator oder jeder Schlitten verwendet einen eigenen, insbesondere stationären Stator. Alternativ oder ergänzend verwenden beide Schlitten eine gemeinsame Maßverkörperung oder jeder Schlitten verwendet eine eigene Maßverkörperung.

Dass der zweite Schlitten gegebenenfalls nicht selbst auf der Führung des ersten Schlittens fährt, sondern nur auf einer Führung der die Relativbewegung zwischen dem ersten Schlitten und dem zweiten Schlitten ermöglicht, der Linearmotor des zweiten Schlittens somit weiter gegenüber dem Magnetstreifen, der Maßverkörperung und/oder dem Stator geführt ist, jedoch indirekt über die Führungswagen des ersten Schlittens und von dort über die Führungswagen des zweiten Schlittens. Diese Konstellation ist vorteilhaft, da hierdurch die Reibung der Führungswägen auf der sich mit großer Strecke bewegenden ersten Schlitten minimiert wird, da in Summe weniger Führungswagen mit der Gesamtgeschwindigkeit und Strecke belastet werden. Die "Relativ"-Führung würde deutlich kleiner dimensioniert werden können. Dieser Konstellation liegt auch die Überlegung zu Grunde, dass wenn die Führungswagen des ersten Schlittens die Kräfte des Motors des zweiten Schlittens mittragen können (Maximallast & Lebensdauer), dann wäre der zweite Schlitten an den ersten Schlitten anzubinden, damit die Führung zwischen dem ersten Schlitten und dem zweiten Schlitten nur noch die Relativbewegung umsetzen können muss (bei deutlich geringerer Laufleistung und mit weniger Reibung für die Bewegung des ersten Schlittens).

Die Momentenkopplung kann genau in einer Bewegungsrichtung - hier unidirektional genannt - erfolgen. So liegt beispielsweise eine unidirektionale Momentenkopplung vor, wenn der eine Schlitten auf den zweiten Schlitten auffährt, oder, wenn der erste Schlitten den zweiten Schlitten abbremst.

Bei einer möglichen Ausgestaltung der Erfindung sind die Schlitten in dem zweiten Betriebszustand unmittelbar und/oder über einen passiven Auffahrabschnitt miteinander insbesondere unidirektional gekoppelt. Bei beiden Varianten kann eine harte Kopplung vorgesehen sein, wobei zum Beispiel die Schlitten Stahl-auf-Stahl miteinander gekoppelt sind. Dies hat den Vorteil, dass im zweiten Betriebszustand der Zwischenabstand zwischen den Schlitten hoch genau konstant ist. Alternativ hierzu können die Schlitten über einen Auffahrabschnitt miteinander gekoppelt sein, wobei der Auffahrabschnitt weicher als Stahl, insbesondere nachgiebig, im Speziellen federnachgiebig und/oder materialnachgiebig ausgebildet ist und insbesondere gering oder stark dämpfende Eigenschaften aufweist. Beispielsweise kann der Auffahrabschnitt aus Kunststoff oder Gummi bestehen, so dass dieser materialnachgiebig ist. Diese Ausgestaltung ermöglicht eine gefederte und/oder gedämpfte Kopplung zwischen den Schlitten, welche bei der Regelung der Antriebe andere Vorteile aufweisen kann.

Bei einer Alternative oder Ergänzung der Erfindung weist die Roboteranordnung eine Koppeleinrichtung auf, wobei der erste der zweite Schlitten über die Koppeleinrichtung miteinander gekoppelt sind. Insbesondere liegt hierbei eine unidirektionale Momentenkopplung vor. In einer möglichen Konkretisierung ist die Koppeleinrichtung als eine abstandsändernde Koppeleinrichtung ausgebildet, wobei die abstandsändernde Koppeleinrichtung den Zwischenabstand zwischen den Schlitten kontrolliert ändern kann, wenn die Schlitten momentengekoppelt sind. Hierdurch kann der Zwischenabstand zwischen den Schlitten exakt definiert werden und dadurch die Verfahrbewegung des Ausgangsorgans in gleicher Weise exakt gesteuert werden.

Die Koppeleinrichtung bildet insbesondere einen längenverstellbaren Anschlag zwischen den Schlitten. Damit kann der Arbeitspunkt, in dem Momentenübertrag geleistet wird für verschiedene Stellungen des Ausgangsorgans, erstellt werden. Die Voreinstellung wird insbesondere vor dem Beginn des Momentenübertrags und/oder unbelastet durchgeführt.

Dadurch ergibt sich die Möglichkeit, die Schlitten momentengekoppelt fahren zu können und zugleich die Verfahrbewegung und/oder -position des Ausgangsorgans unabhängig einstellen zu können. Bei dieser Konkretisierung ist es möglich, dass der erste und der zweite Schlitten hart oder weich gekoppelt ist, wie dies zuvor beschrieben wurde. In dieser Konkretisierung kann sowohl die Koppeleinrichtung als auch der Auffahrabschnitt vorgesehen sein. Beispielsweise weist die Koppeleinrichtung einen Exzenterabschnitt auf und ist auf einem der Schlitten angeordnet. Auf dem anderen Schlitten ist zum Beispiel ein Auffahrabschnitt vorgesehen, wobei der Auffahrabschnitt an dem Exzenterabschnitt momentenübertragend anliegt. Durch Drehen des Exzenterabschnitts kann somit der Zwischenabstand zwischen den Schlitten verändert werden.

Die Momentenkopplung kann auch in beide Bewegungsrichtungen - hier bidirektional genannt-erfolgen. So liegt beispielsweise eine bidirektionale Momentenkopplung vor, wenn ein Moment in beide Bewegungsrichtungen der ersten Achserstreckung von einem Schlitten auf den anderen Schlitten übertragen werden kann. Die bidirektionale Momentenkopplung kann wie oben bereits beschrieben hart (Stahl-auf-Stahl) oder weich (mit Auffahrabschnitten) oder in einer Bewegungsrichtung hart und in der anderen Bewegungsrichtung weich ausgebildet sein. Die bidirektionale Momentenkopplung kann auch mit einem Verschiebeweg umgesetzt sein, wobei bevorzugt der Verschiebeweg im Vergleich zu dem möglichen Zwischenabstand kleiner ausgebildet ist. Alternativ kann dieser Ausgestaltung als eine beidseitige, unidirektionale Momentenkopplung angesehen werden.

Bei einer möglichen Konkretisierung weist die Roboteranordnung eine Verriegelungseinrichtung auf, wobei die Schlitten in beide Bewegungsrichtungen der ersten Achserstreckung momentengekoppelt sind. Dabei können die beiden Schlitten unmittelbar miteinander verriegelt sein. Alternativ hierzu ist die Getriebeeinrichtung verriegelt, so dass die beiden Schlitten über die Getriebeeinrichtung miteinander verriegelt sind.

Bei weiteren Ausgestaltung der Erfindung können die Schlitten über die Getriebeeinrichtung miteinander unidirektional oder bidirektional momentengekoppelt sein.

Bei einer möglichen Ausgestaltung der Erfindung kann die Getriebeeinrichtung als eine Keilgetriebeeinrichtung ausgebildet sein, wobei mindestens einer der Schlitten einen Keil trägt, wobei bei einer Verringerung des Zwischenabstandes zwischen den Schlitten über den Keil das Ausgangsorgan in der zweiten Achserstreckung bewegt wird.

Besonders bevorzugt ist die Getriebeeinrichtung als Kurvengetriebeeinrichtung ausgebildet. Die Getriebeeinrichtung weist ein Kurvenführungsmodul mit einer Kurvenbahn und ein Abfahrmodul mit einem Kurvenorgan auf, wobei das Kurvenorgan die Kurvenbahn bei einer Relativbewegung zwischen dem Kurvenführungsmodul und dem Abfahrmodul abfährt. Eines der Module ist mit dem einen Schlitten, das andere Modul ist mit dem anderen Schlitten in Bezug auf die erste Achserstreckung verbunden. Eines der Module ist in Richtung der zweiten Achserstreckung verschiebbar auf dem zugeordneten Schlitten gelagert, das andere Modul ist in Bezug auf die zweite Achserstreckung mit dem zugeordneten Schlitten verbunden. Besonders bevorzugt ist das Kurvenführungsmodul auf dem ersten Schlitten in Richtung der zweiten Achserstreckung verschiebbar gelagert und in Richtung der ersten Achserstreckung festgelegt. Ferner ist das Abfahrmodul mit dem zweiten Schlitten fest verbunden. Beispielsweise weist das Kurvenführungsmodul eine nutförmige und/oder langlochförmige Kurvenbahn und das Abfahrmodul einen Nutenstein oder Stift auf, welcher in die Kurvenbahn eingreift und besonders bevorzugt relativ zu dieser zwangsgeführt ist. Bei einer Relativbewegung der zwei Schlitten und/oder bei der Änderung des Zwischenabstandes fährt das Kurvenorgan die Kurvenbahn ab, wobei das Kurvenführungsmodul in Abhängigkeit des Verlaufs der Kurvenbahn entlang der zweiten Achserstreckung verschoben wird. Das Kurvenführungsmodul bildet oder trägt das Ausgangsorgan.

Bei einer bevorzugten Ausgestaltung der Erfindung weist die Kurvenbahn mindestens einen Teilabschnitt auf, wobei der Teilabschnitt gleichgerichtet und/oder parallel zu der ersten Achserstreckung ist. Der Teilabschnitt kann als ein Anfangsabschnitt, Endabschnitt und/oder als ein Zwischenabschnitt ausgebildet sein. Ein derartiger Teilabschnitt hat die Eigenschaft, dass bei einer Änderung des Zwischenabstandes die Getriebeeinrichtung das Ausgangsorgan nicht verschiebt. Damit führen kleine Relativbewegungen zwischen den Schlitten nicht zu einer Änderung der Position des Ausgangsorgans. Bei einer möglichen Weiterbildung der Erfindung sind die jeweiligen Module in den jeweiligen Schlitten nach unten abgestützt oder fixiert, so dass das Kurvenorgan und die Kurvenbahn kraftfrei oder zumindest kraftarm zueinander angeordnet sind. Es ist besonders bevorzugt, dass das Kurvenorgan in dem Teilabschnitt der Kurvenbahn angeordnet ist, wenn sich die Roboteranordnung in dem Präzisionsbetriebszustand befindet.

Bei einer bevorzugten Weiterbildung der Erfindung weist die Roboteranordnung eine Hauptversorgungsleitung zur Versorgung der Antriebe mit Energie und optional ergänzend Steuerungssignalen auf. Ferner weist die Roboteranordnung eine Nebenversorgungsleitung zur Verbindung der beiden Schlitten zur Übertragung von Energien optional ergänzend Steuersignalen. Einer der Schlitten führt das Ausgangsorgan in der zweiten Achserstreckung, beispielsweise ist das Ausgangsorgan relativ zu diesem Schlitten linear geführt. Der andere Schlitten trägt die Hauptversorgungsleitung. Die Schlitten sind untereinander mit der Nebenversorgungsleitung verbunden. Diese Ausgestaltung hat insbesondere in dem Präzisionsbetriebszustand den Vorteil, dass etwaige Einflüsse vom Verfahren der Hauptversorgungsleitung nicht auf den Schlitten mit dem Ausgangsorgan übertragen werden. Vielmehr sind die beiden Schlitten nur über die Nebenversorgungsleitung verbunden, welche entsprechend kürzer und/oder leichter und/oder flexibler ausgebildet sein kann als die Hauptversorgungsleitung. Somit werden in dem Präzisionsbetriebszustand negative Einflüsse durch die Hauptversorgungsleitung unterbunden. Insgesamt sind die Antriebe bevorzugt regelungstechnisch entkoppelt für eine bestmögliche Regelungsqualität, wobei die Anordnung so ausgeführt sein kann, dass ein Kabelschlepp als die Hauptversorgungsleitung einer Hauptachse mit einem der Schlitten mit dem Ausgangsorgan an dem anderen Schlitten für eine Hilfsbewegung angebunden ist. Insbesondere so ausgeführt, so dass im regelungstechnisch /dynamisch "wechselwirkungsfreien" Zustand der Kabelschlepp sich nur auf den Schlitten für die Hilfsbewegung auswirkt und der Schlitten mit dem Ausgangsorgan deutlich weniger Störung aus der Bewegung des Kabelschlepps abbekommt. Somit wird der Einfluss des Kabelschlepps deutlich gedämpft über eine "Kabelbrücke" in Form der Nebenversorgungsleitung zwischen den Schlitten, welche durch deutlich geringere Masse, viel kleinere Reibung und viel kleinere Relativbewegungen charakterisiert ist, da beide Schlitten eine gemeinsame Bewegung in Hauptachsen-Richtung der ersten Erstreckungsrichtung ausüben.

Bei einer bevorzugten Ausgestaltung der Erfindung ist die Steuereinrichtung ausgebildet die Roboteranordnung in mindestens einem, einigen oder allen der folgenden Betriebszustände anzusteuern:
Beschleunigungsbetriebszustand:
   Die beiden Schlitten sind bidirektional oder unidirektional miteinander momentengekoppelt und beschleunigen gemeinsam. Dabei ist es möglich, dass diese in einem Eco-Beschleunigungsbetriebszustand arbeiten, wobei einer der Schlitten, insbesondere der in Bewegungsrichtung hintere Schlitten für die unidirektionale Momentenkopplung, den anderen Schlitten, insbesondere den Antrieb des anderen Schlittens, entlastet, so dass dieser zum Beispiel abkühlen kann. Alternativ ist es möglich, dass diese in einem Turbo-Beschleunigungsbetriebszustand arbeiten, wobei beide Schlitten, insbesondere beide Antriebe der Schlitten, die momentengekoppelten Schlitten insbesondere bestmöglich beschleunigen.
Bremsbetriebszustand:
   Die beiden Schlitten sind bidirektionale oder unidirektional miteinander momentengekoppelt und Bremsen gemeinsam. Dabei ist es möglich, dass diese in einem Eco-Bremsbetriebszustand arbeiten, wobei einer der Schlitten, insbesondere der in Bewegungsrichtung vordere Schlitten für die unidirektionale Momentenkopplung, den anderen Schlitten, insbesondere den Antrieb des anderen Schlittens, entlastet, so dass dieser zum Beispiel abkühlen kann. Alternativ ist es möglich, dass diese in einem Turbo-Bremsbetriebszustand arbeiten, wobei beide Schlitten, insbesondere beide Antriebe der Schlitten, die momentengekoppelten Schlitten insbesondere bestmöglich abbremsen.
Präzisionsbetriebszustand:
   Die beiden Schlitten sind entkoppelt, verfahren jedoch parallel zueinander, so dass der Schlitten, der das Ausgangsorgan trägt, einen hochpräzisen Lauf umsetzen kann.
Schnelllaufbetriebszustand:
   Beide Schlitten bewegen sich entkoppelt oder momentengekoppelt mit gleicher Geschwindigkeit.

Ein weiterer Gegenstand der Erfindung betrifft eine Fertigungsanlage mit mindestens einer Roboteranordnung wie diese zuvor beschrieben wurde bzw. nach einem der vorhergehenden Ansprüche. Besonders bevorzugt weist die Fertigungsanlage mindestens einen Bearbeitungsabschnitt und mindestens einen Logistikabschnitt auf. Es ist vorgesehen, dass das Ausgangsorgan mittelbar oder unmittelbar ein Werkstück trägt. Dabei kann das Werkstück unmittelbar auf dem Ausgangsorgan angeordnet sein oder mittelbar beispielsweise über einen Werkstückträger. In dem mindestens einen Bearbeitungsabschnitt wird das Werkstück bearbeitet. In dem mindestens einen Logistikabschnitt wird das Ausgangsorgan mit dem Werkstück beladen bzw. entladen. So kann in einem gemeinsamen Logistikabschnitt sowohl das Entladen als auch das Beladen stattfinden. Es kann jedoch auch vorgesehen sein, dass ein Logistikabschnitt für das Beladen und ein Logistikabschnitt für das Entladen verwendet wird. Besonders bevorzugt wird für ein Durchfahren durch den Bearbeitungsabschnitt der Präzisionsbetriebszustand eingenommen und für ein Anfahren des Logistikabschnitts außerhalb des Bearbeitungsabschnitts der Beschleunigungsbetriebszustand, der Bremsbetriebszustand und/oder der Schnelllaufbetriebszustand verwendet.

Besonders bevorzugt ist ein Bearbeitungsabschnitt ein Druckkopf, insbesondere für einen Farbdruck und/oder funktionalen Druck, wie z.B. mit leitfähiger Tinte, Beschichtung etc., auf dem Werkstück, angeordnet. Bei dieser Anwendung ist besonders vorteilhaft, wenn die Bereitstellung des Werkstücks für den Bearbeitungsabschnitt möglichst schnell erfolgt, um einen hohen Durchsatz auf der Fertigungsanlage zu erreichen und zugleich ein hochpräziser Lauf in dem Bearbeitungsabschnitt umgesetzt wird, um eine hohe Druckqualität zu erreichen.

Bei einer bevorzugten Weiterbildung der Erfindung weist die Fertigungsanlage mindestens zwei der Roboteranordnungen auf, wobei die zwei Roboteranordnungen den Bearbeitungsabschnitt in einem Umlaufprinzip mit Werkstücken versorgen. Hierbei werden die Ausgangsorgane jeweils in einer Bearbeitungsposition in Bezug auf die zweite Achserstreckung durch den Bearbeitungsabschnitt durchgefahren und in einer Parkposition in Bezug auf die zweite Achserstreckung durch den Bearbeitungsabschnitt zurückgefahren, wobei die Parkposition derart versetzt zu der Bearbeitungsposition gewählt ist, dass die Ausgangsorgane gegebenenfalls mit aufgesetzten Werkstück kollisionsfrei aneinander vorbeifahren können. Damit ist die Leistungsfähigkeit der Fertigungsanlage weiter zu steigern.

Ein weiterer Gegenstand der Erfindung betrifft ein Verfahren zum Betreiben der Roboteranordnung und/oder der Fertigungsanlage nach einem der vorhergehenden Ansprüche oder wie diese zuvor beschrieben wurde(n), wobei mindestens einer der zuvor genannten Betriebszustände oder Unterbetriebszustände umgesetzt wird.

Weitere Merkmale, Vorteile und Wirkung der Erfindung ergeben sich aus der nachfolgenden Beschreibung eines bevorzugten Ausführungsbeispiels der Erfindung sowie der beigefügten Figuren. Diese zeigen:
Figur 1 eine schematische Seitenansicht von einem ersten Schlitten einer Roboteranordnung, wobei die Roboteranordnung ein Ausführungsbeispiel der Erfindung bildet;
Figur 2 eine schematische Seitenansicht von einem zweiten Schlitten der Roboteranordnung;
Figuren 3 a, b die zwei Schlitten der vorhergehenden Figuren mit unterschiedlichem Zwischenabstand in der ersten Achserstreckung;
Figur 4 eine schematische Seitenansicht von einem Kurvenführungsmodul der Roboteranordnung;
Figuren 5 a, b der erste Schlitten und das Kurvenführungsmodul der vorhergehenden Figuren mit unterschiedlicher Position in der zweiten Achserstreckung;
Figuren 6 a, b der zweite Schlitten und das Kopplungsmodul der vorhergehenden Figuren mit unterschiedlicher Position in der zweiten Achserstreckung;
Figur 7a, b, c, d die Roboteranordnung mit minimalen/maximalen Hub in der zweiten Achserstreckung sowie in dem Präzisionsmodus;
Figur 8a eine Detailansicht des ersten Schlittens mit einer Verriegelungseinrichtung;
Figur 8b die Verriegelungseinrichtung der Figur 8a;
Figur 8c ein Schnitt der Figur 8a mit verriegelter/entriegelter Verriegelungseinrichtung;
Figur 9 eine stark schematisierte Fertigungsanlage mit zwei der Roboteranordnungen;
Figur 10 ein Geschwindigkeitsprofil für die Fertigungsanlage in der Figur 9.

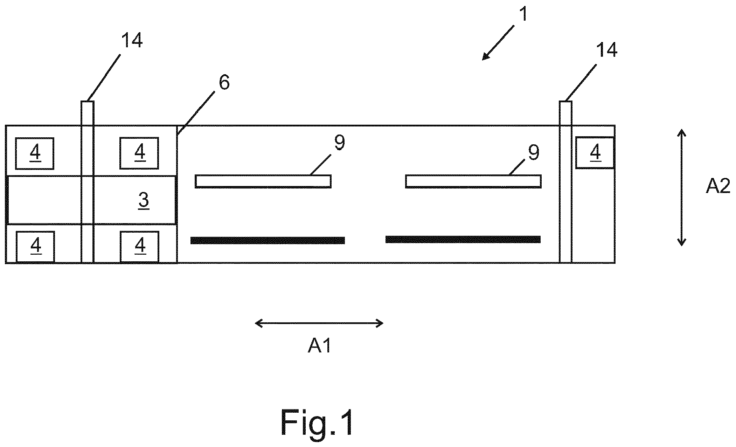

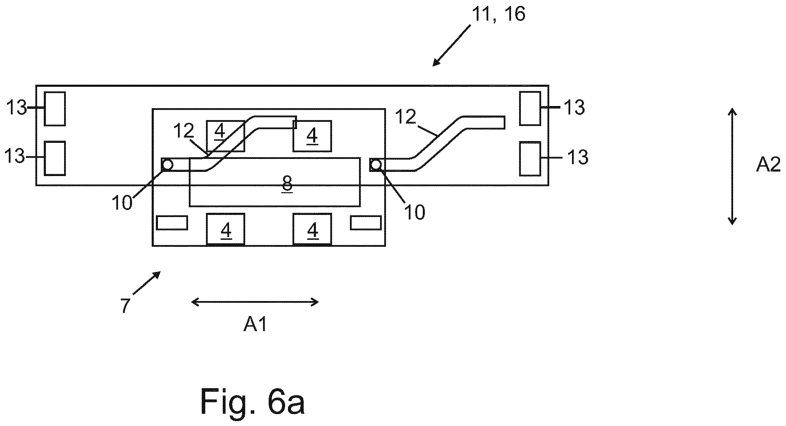

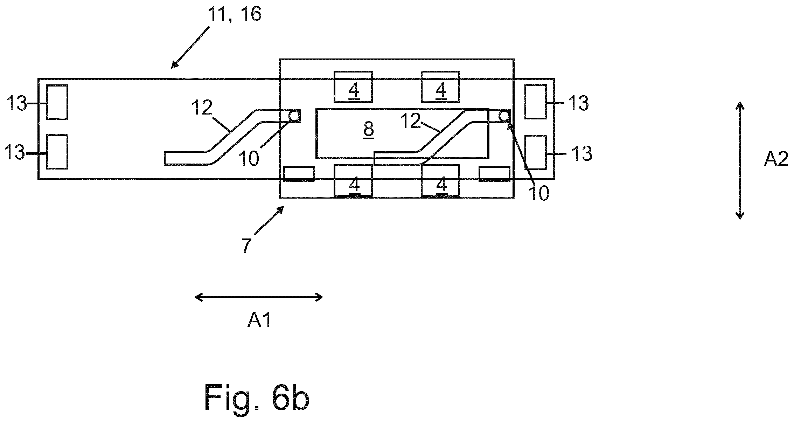

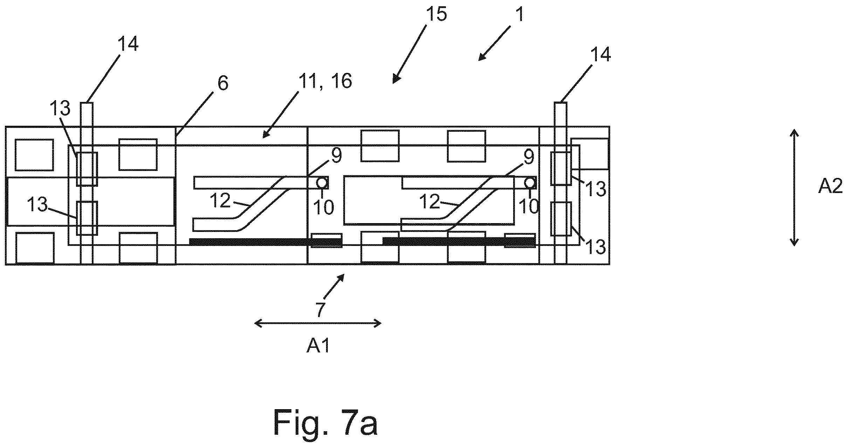

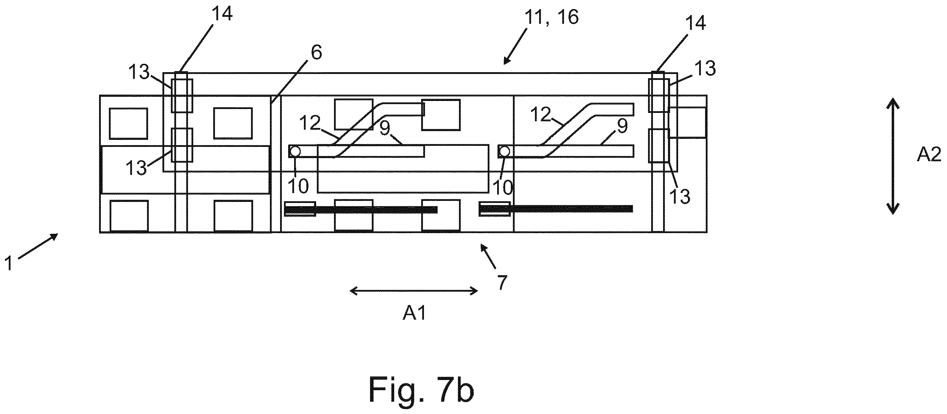

Die Figur 1 zeigt in einer schematischen Draufsicht einen ersten Schlitten 1 zum Einsatz in einer Roboteranordnung 2, wie diese in den Figuren 7a, b gezeigt ist. Der erste Schlitten 1 ist als ein selbstfahrender Schlitten ausgebildet und weist einen ersten Antrieb 3 auf. Der erste Antrieb 3 ist insbesondere als ein Linearmotor ausgebildet. Der erste Schlitten 1 weist in einem ersten Randbereich in Bezug auf eine erste Achserstreckung A1 vier A1-Führungswagen 4 zum Führen des Schlittens 1 auf A1-Führungsschienen 5 (Figur 6) der Roboteranordnung 2. Der erste Antrieb 3 ist zwischen den A1-Führungswagen 4 angeordnet. Zur Stabilisierung weist der erste Schlitten 1 einen weiteren A1-Führungswagen 4 auf dem gegenüberliegenden Randbereich auf. Der erste Schlitten 1 kann somit auf den A1-Führungsschienen 5 durch den ersten Antrieb 3 selbstständig verfahren. Die A1-Führungswagen 4 und der erste Antrieb 3 können auf einer gemeinsamen Schlittenplatte 6 angeordnet sein.

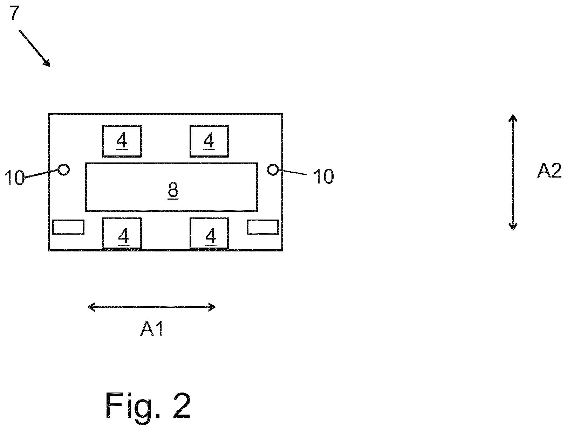

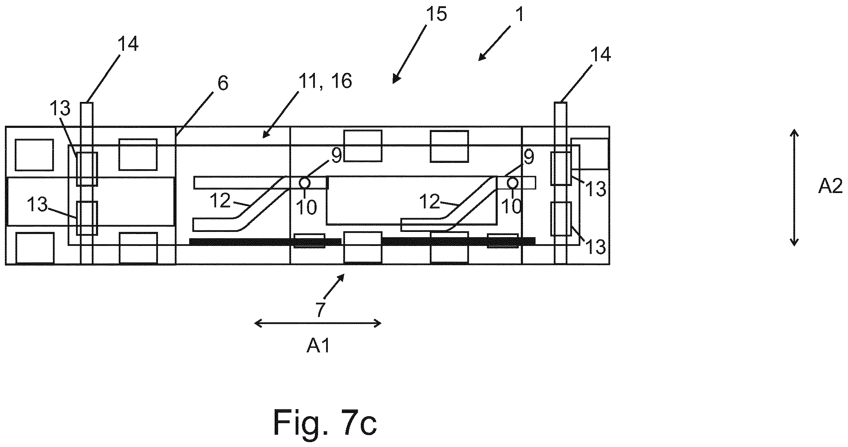

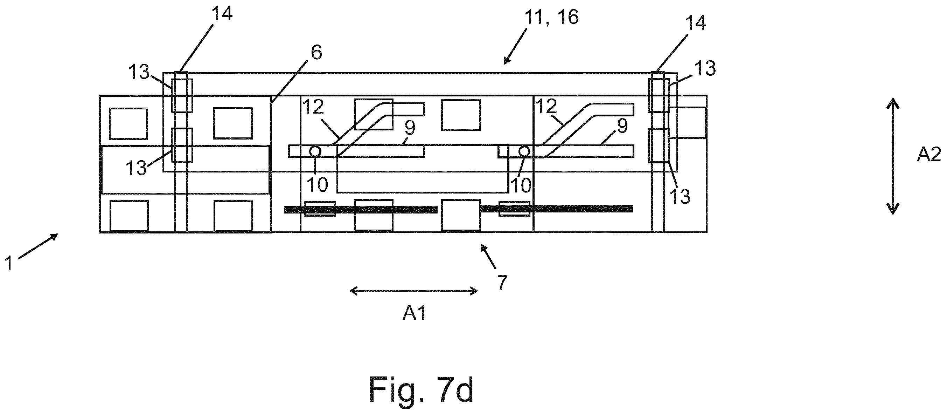

Die Figur 2 zeigt in einer schematischen Draufsicht einen zweiten Schlitten 7 zum Einsatz in der Roboteranordnung 2. Der zweite Schlitten 7 ist als ein selbstfahrender Schlitten ausgebildet und weist einen zweiten Antrieb 8 auf, der entweder auf einer eigenen Führung, der Führung des Schlittens 1 oder einer separaten Führungsschiene, die auf dem Schlitten 1 befestigt ist, geführt werden kann. Der zweite Antrieb 8 ist insbesondere als ein Linearmotor ausgebildet. Der zweite Schlitten 7 weist vier A1-Führungswagen 4 zum Führen des Schlittens auf A1-Führungsschienen 5 (Figur 7 a, b) der Roboteranordnung 2 auf. Der zweite Antrieb 7 ist zwischen den A1-Führungswagen 4 angeordnet. Der zweite Schlitten 7 kann somit auf den A1-Führungsschienen 5 oder alternativ auf der Führungsschiene (nicht dargestellt) durch den zweiten Antrieb 8 selbstständig verfahren.

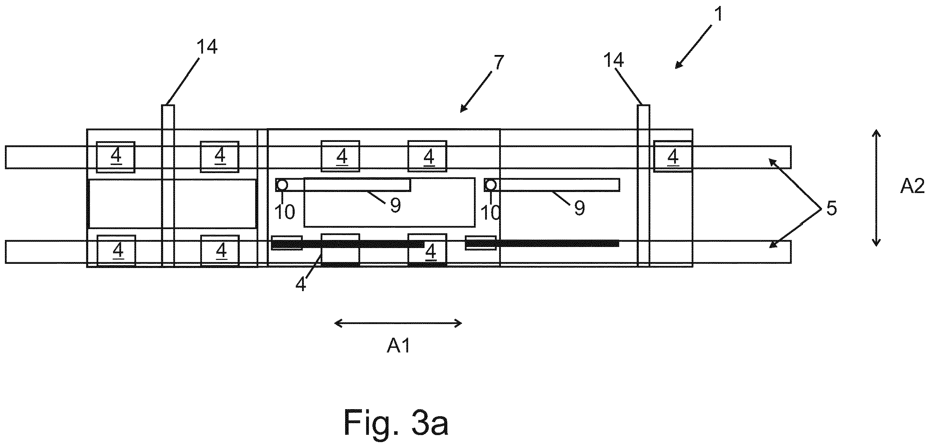

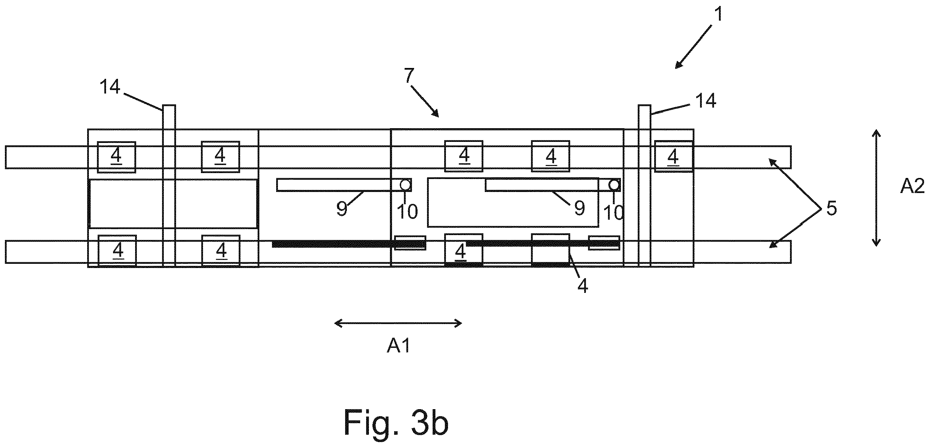

In der Figur 3 a, b sind der erste Schlitten 1 und der zweite Schlitten 7 gemeinsam auf den A1-Führungsschienen 5 dargestellt. Die A1-Führungsschienen 5 weisen zudem Maßverkörperungen zum Beispiel in Form von Magnetstreifen auf, alternativ sind diese separat zu der A1-Führungsschine angeordnet. Beide Schlitten 1, 7 nutzen somit die gleichen A1-Führungsschienen 5 mit den gleichen Maßverkörperungen. In der Figur 3 a sind die Schlitten 1, 7 mit einem minimalen Zwischenzustand, in der Figur 3 b sind die Schlitten 1, 7 mit einem maximalen Zwischenzustand dargestellt. Der erste Schlitten 1 weist Kopplungslanglöcher 9 auf, wobei die Kopplungslanglöcher 9 parallel zur ersten Achserstreckung A1 verlaufen. Der zweite Schlitten 7 ist als ein Abfahrmodul mit einem Abfahrorgan 10 ausgebildet. wobei das Abfahrorgan als eine Kopplungsrolle oder als ein Kopplungsblock realisiert ist und wobei das Kopplungsorgan 10 in die Kopplungslanglöcher 9 eingreift. In den Extrempositionen des Zwischenzustands liegen das Kopplungsorgan 10 jeweils kontaktierend an dem einen Rand der Kopplungslanglöcher 9 an. Die beiden Schlitten 1, 7 können sich somit ungekoppelt und/oder unabhängig voneinander in der ersten Achserstreckung A1 bewegen, jedoch nur im Rahmen des Zwischenabstandes.

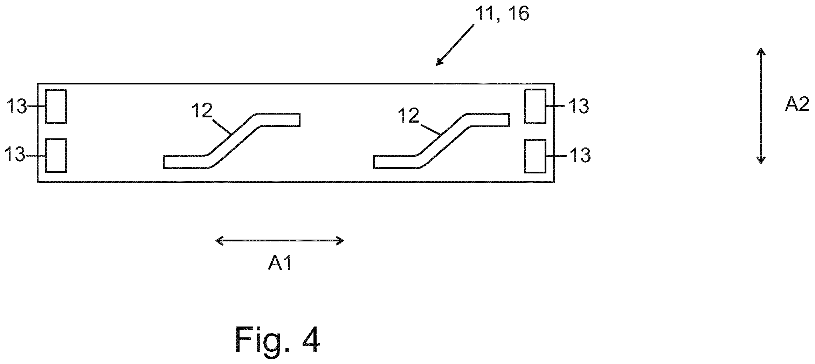

Die Figur 4 zeigt ein Kurvenführungsmodul 11 mit einer Kurvenbahn 12, wobei das Kurvenführungsmodul 11 plattenförmig ausgebildet ist und die Kurvenbahnen 12 jeweils als S-förmige Langlöcher realisiert sind. Das Kurvenführungsmodul 11 weist vier A2-Führungswagen 13 auf. Der erste Schlitten 1 weist dagegen zwei A2-Führungsschienen 14 auf, welche in einer zweiten Achserstreckung A2 verlaufen. Das Kurvenführungsmodul 11 kann somit relativ zu dem ersten Schlitten 1 über die A2-Führungswagen 13 und die A2-Führungsschienen 14 in der zweiten Achserstreckung A2 verschoben werden.

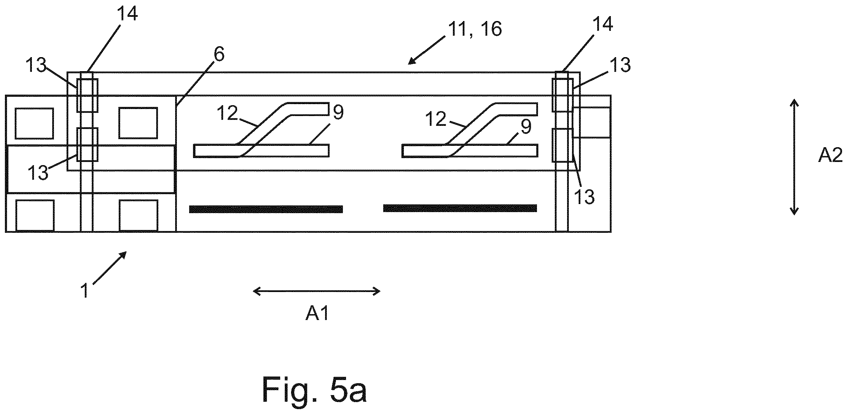

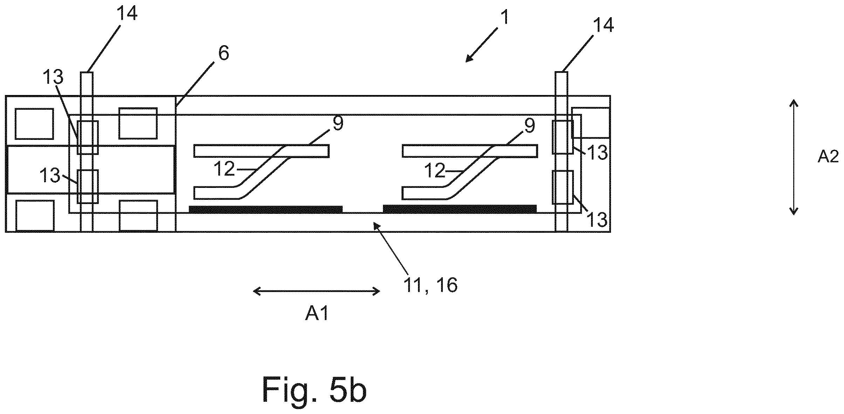

In den Figuren 5 a, b sind der erste Schlitten 1 und das Kurvenführungsmodul 11 gemeinsam dargestellt. Dabei zeigt die Figur 5 a das Kurvenführungsmodul 11 bei einem maximalen Hub in der zweiten Achserstreckung A2 und die Figur 5b das Kurvenführungsmodul 11 bei einem minimalen Hub in der zweiten Achserstreckung A2.

In einem montierten Zustand durchgreifen die Kopplungsorgane 10 des zweiten Schlittens 7 die Kurvenbahnen 12 das Kurvenführungsmodul 11. In den Figuren 6 a, b sind der zweite Schlitten 7 und das Kurvenführungsmodul 11 gemeinsam dargestellt. Dabei zeigt die Figur 6 a das Kurvenführungsmodul bei einem maximalen Hub in der zweiten Achserstreckung A 2 und die Figur b das Kurvenführungsmodul 11 bei einem minimalen Hub in der zweiten Achserstreckung A 2.

Die Figur 7a zeigt die Roboteranordnung 1 mit dem ersten Schlitten 1, dem zweiten Schlitten 7 und dem dazwischen angeordneten Kurvenführungsmodul 11. Gemeinsam bilden diese eine Getriebeeinrichtung 15, wobei die Getriebeeinrichtung 15 als eine Kurvengetriebeeinrichtung ausgebildet ist. Der erste Schlitten mit den A2-Führungsschienen 14 bildet ein erstes Eingangsorgan, der zweite Schlitten mit den A2-Führungswagen 13 bildet ein zweites Eingangsorgan in die Getriebeeinrichtung 15. Das Kurvenführungsmodul 11 bildet dagegen ein Ausgangsorgan 16 der Getriebeeinrichtung 15. Bei einer Änderung des Zwischenabstandes zwischen dem ersten und dem zweiten Schlitten 1, 7 in der ersten Achserstreckung A1 wird das Ausgangsorgan der Getriebeeinrichtung 15 in der zweiten Achserstreckung A2 verschoben. Die Figur 7a zeigt die Roboteranordnung mit einem minimalen Hub des Ausgangsorgans 16, die Figur 7b zeigt die Roboteranordnung 2 mit einem maximalen Hub des Ausgangsorgans 16.

Die Roboteranordnung 2 kann auf unterschiedliche Arten momentengekoppelt werden. Die Momentenkopplung erlaubt es, ein Moment, insbesondere in Beschleunigungsmoment oder ein Bremsmoment von einem der Schlitten auf den anderen Schlitten zu übertragen. In den Figuren 7a und 7b sind die Schlitten 1, 7 jeweils unidirektional, also nur in eine Bewegungsrichtung, momentengekoppelt.

Die unidirektionale Momentenkopplung erfolgt dadurch, dass das Kopplungsorgan 10 an den Endbegrenzungen der Kopplungslanglöchern 9 einmal in einer Bewegungsrichtung in der Figur 7a und in der Figur 7b in der anderen Bewegungsrichtung kontaktierend anliegt. In Bewegungsrichtung betrachtet kann der hintere Schlitten, also der zweite Schlitten 7, dann ein Beschleunigungsmoment auf den vorderen Schlitten, also den ersten Schlitten 1, oder der vordere Schlitten, also der erste Schlitten 1, ein Bremsmoment auf den hinteren Schlitten, also der zweite Schlitten 7, übertragen.

In den Figuren 7 c, d sind die Schlitten 1, 7 in einem Präzisionsmodus, wobei das Koppelorgan 10 jeweils in Teilabschnitt der Kurvenbahn 12 angeordnet ist, welcher gleichgerichtet und/oder parallel zu der ersten Achserstreckung A1 ist. In diesem Präzisionsmodus sind die beiden Schlitten voneinander entkoppelt, wobei geringe Änderungen von dem Zwischenabstand zwischen den zwei Schlitten 1, 7 zu keiner Positionsänderung in der A2-Richtung des Ausgangsorgans 16 führt.

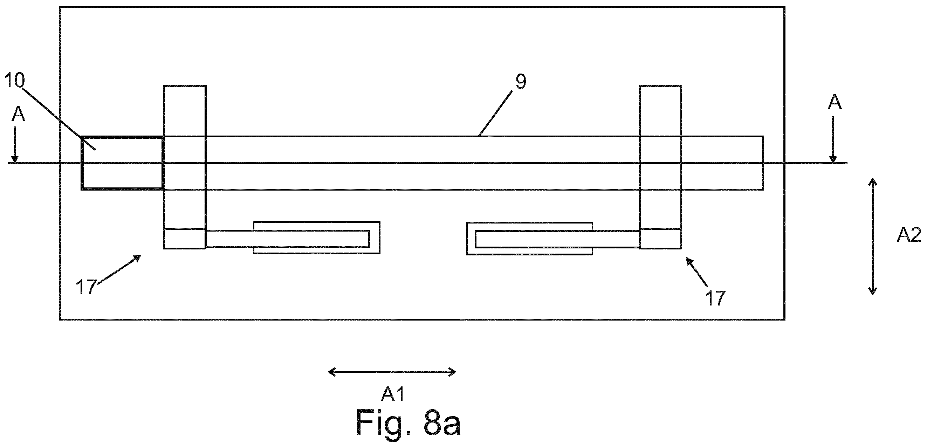

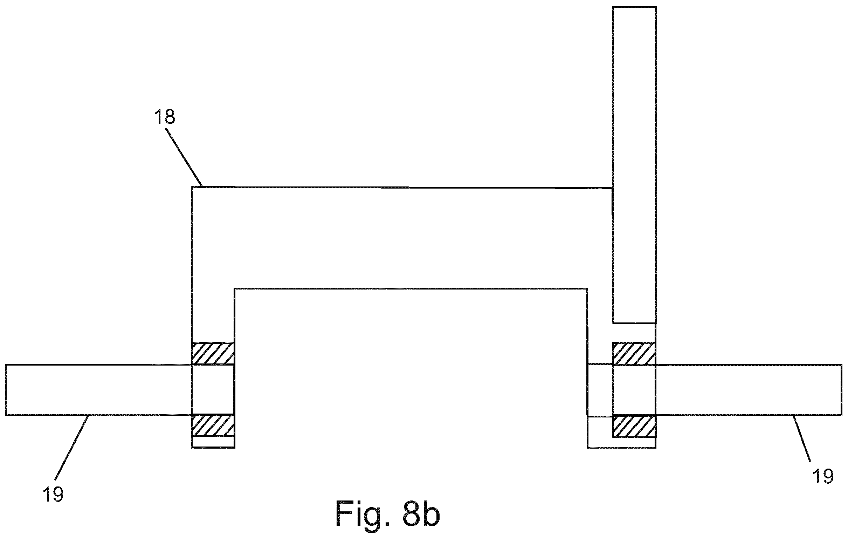

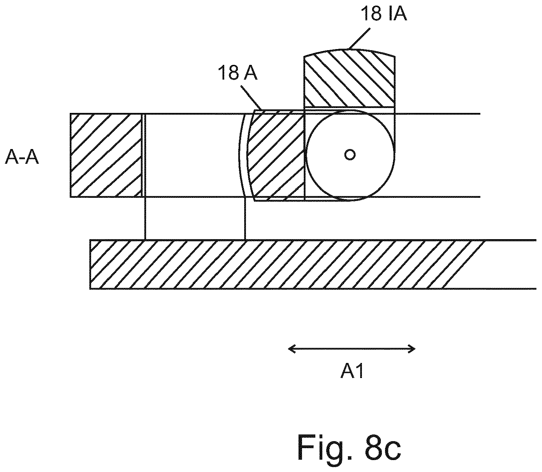

In den Figuren 8 a, b, c, welche eine Draufsicht auf einen Detailausschnitt von dem ersten Schlitten 1 mit zwei Verriegelungseinrichtungen 17, eine der Verriegelungseinrichtungen 17 sowie einen Schnitt durch die Verriegelungseinrichtung 17 zeigen, wird eine bidirektionale Momentenkopplung, also eine Momentenkopplung in beide Bewegungsrichtungen, dargestellt. In der Figur 8 a ist eine Draufsicht auf den ersten Schlitten 1 gezeigt, wobei ergänzend das Kopplungsorgan 10 gezeigt ist, welches in das Kopplungslangloch 9 eingreift. Quer zur Längserstreckung des Kopplungslanglochs 9 erstreckt sich die Verriegelungseinrichtung 17. Diese wird in einem aktiven Zustand in das Kopplungslangloch 9 abschnittsweise eingeschwenkt, so dass das Kopplungsorgan 10 in beide Bewegungsrichtungen festgelegt ist. In einem inaktiven Zustand ist die Verriegelungseinrichtung 17 aus dem Kopplungslangloch 9 ausgeschwenkt, so dass das Kopplungsorgan 10 frei in dem Kopplungslangloch 9 verfahren kann. Bei der bidirektionale Momentenkopplung können somit beliebige Momente in beide Bewegungsrichtungen zwischen den Schlitten 1, 7 übertragen werden. Um "Spielfrei" verriegeln zu können könnte hier eine exzentrische Außenkontur verwendet werden, die den Spalt links und rechts neben dem Kopplungsorgan 10 schließt anstatt dort "Umkehrspiel" zu erzeugen.

Eine der Verriegelungseinrichtungen 17 ist in der Figur 8 b gezeigt. Die Verriegelungseinrichtung 17 weist einen Exzenterabschnitt 18 auf, wobei der Exzenterabschnitt 18 schwenkbar über Stifte 19 gelagert ist. Die Verriegelungseinrichtung 17 wird quer zur Längserstreckung des Kopplungslanglochs 9 angeordnet, so dass der Exzenterabschnitt 18 in das Kopplungslangloch 9 eingeschwenkt bzw. ausgeschwenkt werden kann. Dadurch, dass der Exzenterabschnitt 18 umgekehrt U-förmig ausgebildet ist, wobei die freien Enden der beiden Schenkel über die Stifte 19 schwenkbar gelagert sind, kann das Kopplungsorgan 10 in dem aktiven Zustand der Verriegelungseinrichtung 17 durch den Freiraum zwischen den Schenkeln durchfahren.

Die Figur 8 c zeigt einen Querschnitt gemäß der Schnittlinie A-A in der Figur 8 a, wobei schematisch der aktive Zustand A und der inaktive Zustand IA der Verriegelungseinrichtung 17 bzw. des Exzenterabschnitts 18 gezeigt ist. In dem aktiven Zustand A ist das Kopplungsorgan 10 in der einen Bewegungsrichtung durch das Ende des Kopplungslanglochs 9 und in der anderen Bewegungsrichtung durch die Verriegelungseinrichtung 17 beschränkt. Prinzipiell kann das Kopplungsorgan 10 zwischen den Begrenzungen geklemmt sein. Für ein leichteres Einfahren der Verriegelungseinrichtung 17 ist es jedoch besser, wenn das Kopplungsorgan 10 mit Spiel in Bewegungsrichtung aufgenommen ist. Vorzugsweise ist das Spiel größer als 0,5 mm oder 1 mm.

Prinzipiell ist es möglich, dass das Kopplungsorgan 10 nicht gegen die Endbegrenzung des Kopplungslanglochs 9 als Anschlag fährt, sondern dass dieses gegen die Endbegrenzung der Kurvenbahn 12 von dem Kurvenführungsmodul 11 fährt. Auch mit dieser Momentenkopplung wäre ein entsprechender Momentenübertrag möglich. Es wäre auch möglich, dass die unidirektionale Momentenkopplung oder auch die bidirektionale Momentenkopplung zumindest in einer Bewegungsrichtung durch einen Auffahrabschnitt umgesetzt wird, wobei die Schlitten 1, 7 über den Auffahrabschnitt miteinander in Kontakt treten. Es ist auch möglich, dass ein derartiger Auffahrabschnitt als Endbegrenzung der Kurvenbahn 12 oder des Kopplungslanglochs 9 ausgebildet ist. Die Kopplung über den Auffahrabschnitt kann als eine harte Kopplung oder als eine weiche Kopplung ausgebildet sein.

Es ist jedoch vorteilhaft, dass die Kopplung unter Ausschluss der Getriebeeinrichtung 16 verläuft und in dem Zustand der Momentenkopplung das Kopplungsorgan 10 in der Kurvenbahn 12 in einem Teilabschnitt angeordnet ist, welcher parallel zu der ersten Achserstreckung A1 verläuft. In dieser Konstellation wird erreicht, dass geringe Relativbewegungen zwischen den Schlitten 1, 7 nicht zu entsprechenden Bewegungen des Ausgangsorgans 16 in der Richtung der zweiten Achserstreckung A2 führen, sondern zumindest für diesen Teilabschnitt der Kurvenbahn 12 vollständig entkoppelt sind.

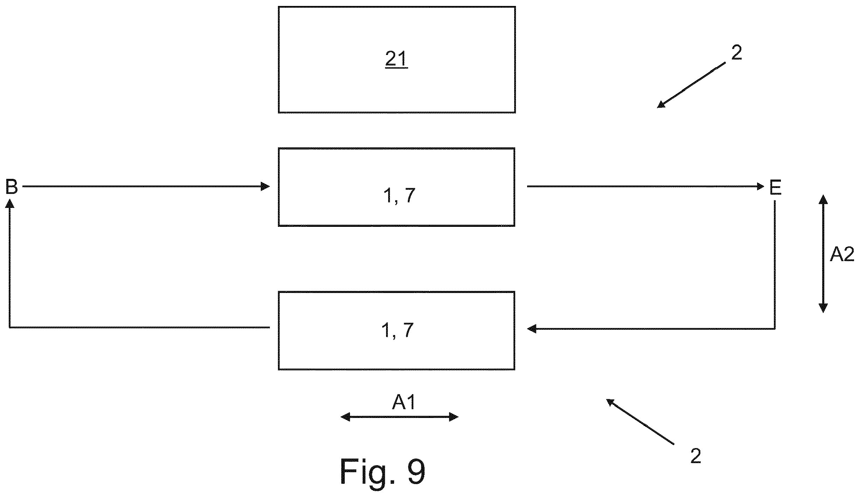

Die Figur 9 zeigt eine Fertigungsanlage 20 mit einer Bearbeitungsstation 21 mit zwei derartigen Roboteranordnungen 2. Die Bearbeitungsstation 21 ist beispielsweise als eine Druckstation zum Aufbringen von Tinte auf ein Werkstück, welches von dem Ausgangsorgan 16 getragen wird. Die Fertigungsanlage 20 ist in einer Seitenansicht gezeigt, wobei einer der gekoppelten Schlitten 1, 7 in einer Bearbeitungsposition und der andere gekoppelte Schlitten 1, 7 in einer Rückführungsposition ist. Die Bearbeitungsposition ist höher als die Rückführungsposition angeordnet. Die Roboteranordnungen 2 arbeiten jeweils in einem Umlaufprinzip. So wird das Ausgangsorgan 16 von der einen Roboteranordnung 2 bei einer Beladestation B insbesondere in der Bearbeitungsposition beladen. Nachfolgend wird das Ausgangsorgan 16 auf den gekoppelten Schlitten 1, 7 zu der Bearbeitungsstation 21 gefahren, dort bearbeitet und dann weiter gefahren zu einer Entladestation E. Dort wird das Ausgangsorgan 16 von dem Werkstück entladen und das Ausgangsorgan 16 von der Bearbeitungsposition in die Rückführungsposition überführt. Von da aus fährt das Ausgangsorgan 16 auf den gekoppelten Schlitten 1, 7 in der Rückführungsposition durch die Bearbeitungsstation 21 durch, wobei aufgrund des Höhenversatzes von Bearbeitungsposition und Rückführungsposition diese gekoppelten Schlitten 1, 7 kollisionsfrei an den gekoppelten Schlitten 1, 7 vorbeifahren können, die sich gerade in der Bearbeitungsposition befinden. In dem Bereich der Beladestation B wechselt das Ausgangsorgan 16 der gekoppelten Schlitten 1, 7 wieder in die Bearbeitungsposition und startet den nächsten Umlauf. Die andere Roboteranordnung 2 fährt den gleichen Umlauf, jedoch im Gegentakt.

Bei konkreten Ausgestaltungen können Variationen eingeführt werden, wie z.B.:
- Beladestation B und Entladestation E können vertauscht werden oder nur auf einer Seite angeordnet sein.
- Der Übergang von der Bearbeitungsposition zu der Rückführungsposition kann nicht stufenartig an der Beladestation B und Entladestation E erfolgen, sondern auch rampenmäßig in den Zwischenbereichen.

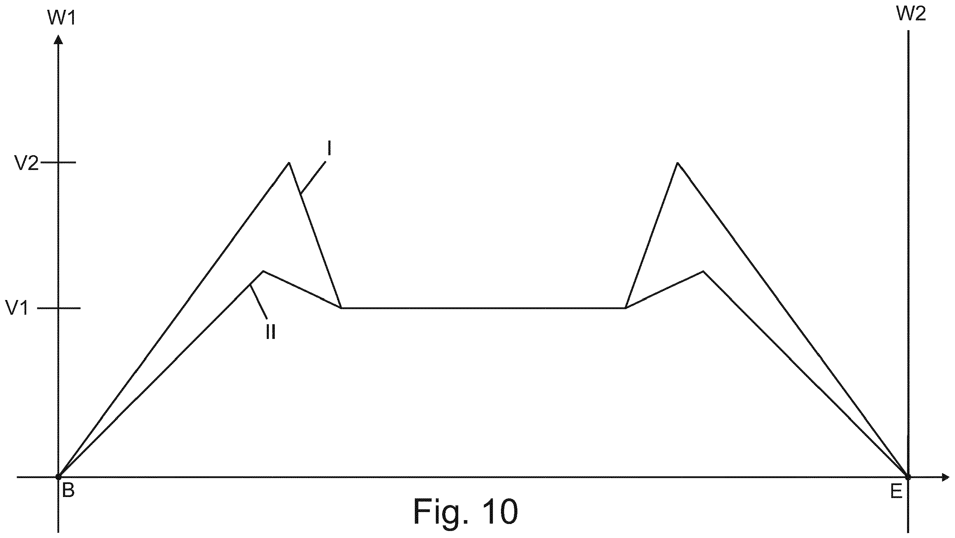

In der Figur 10 ist ein erstes Geschwindigkeitsprofil I, aufgetragen über den Weg von der Beladestation B zu der Entladestation B, dargestellt.

Das Geschwindigkeitsprofil I ist als ein Turbo-Geschwindigkeitsprofil ausgebildet: Ausgehend von der Beladestation B erfolgt durch eine Momentenkopplung in der Bewegungsrichtung zu der Bearbeitungsstation 21 eine hohe oder sogar maximale Geschwindigkeit dadurch, dass beide Antriebe 3, 8 ein hohes oder maximales Antriebsmoment umsetzen. Dabei kann insbesondere der zweite Schlitten 7 den ersten Schlitten 1 mit einem Antriebsmoment beschleunigen. Dies entspricht einem Turbo-Beschleunigungsbetriebszustand. Vor der Bearbeitungsstation 21 erfolgt ein starkes Abbremsen, wobei beide Antriebe 3, 8 ein hohes oder maximales Bremsmoment umsetzen. Dabei kann insbesondere der erste Schlitten 1 den zweiten Schlitten 7 mit einem Bremsmoment abbremsen. Dies entspricht einem Turbo-Bremsbetriebszustand.

Für diesen Übergang kann zum einen eine unidirektionale Momentenkopplung verwendet werden, wobei bei dem Übergang von dem Turbo-Beschleunigungsbetriebszustand zu dem Turbo-Bremsbetriebszustand das Kopplungsorgan 10 die Endposition in dem Kopplungslangloch 9 wechseln muss. Dies bedeutet einen zusätzlichen Kontrollaufwand und zudem einen gewissen Zeitverlust.

Alternativ hierzu kann eine bidirektionale Momentenkopplung verwendet werden, wobei bei einer ersten Variante in dem Turbo-Beschleunigungsbetriebszustand die Verriegelungseinrichtung 17 zunächst geöffnet ist bis eine unidirektionale Momentenkopplung gegeben ist und dann erst geschlossen wird. Nach dem Turbo-Bremsbetriebszustand wird die Verriegelungseinrichtung 17 wieder geöffnet. Bei einer zweiten Variante wird die Verriegelungseinrichtung 17 bereits in der Beladestation B geschlossen, nachfolgend der Turbo-Beschleunigungsbetriebszustand und der Turbo-Bremsbetriebszustand umgesetzt, wobei in dem Turbo-Bremsbetriebszustand das Kopplungsorgan 10 an dem Endbereich des Kopplungslanglochs 9 anliegt und die Verriegelungseinrichtung 17 unbelastet und damit schneller geöffnet werden kann.

In dem Bereich der Bearbeitungsstation 21 erfolgt ein Präzisionsbetriebszustand, wobei die beiden Schlitten 1, 7 parallel, jedoch mechanisch voneinander entkoppelt Verfahren. Dafür ist zum einen bevorzugt die Verriegelungseinrichtung 17 geöffnet, zum anderen befindet sich das Kopplungsorgan 10 in einem Teilabschnitt der Kurvenbahn 12, welcher parallel zur ersten Achserstreckung A 1 ausgerichtet ist. Damit ist die mechanische Kopplung zwischen den Schlitten 1, 7 aufgehoben oder zumindest minimiert. Es kann sogar vorgesehen sein, dass der zweite Schlitten 7 eine Hauptversorgungsleitung (nicht dargestellt) trägt, wobei diese beispielsweise ein Kabelschlepp ausgebildet ist. Damit wirken Störeinflüsse von der Hauptversorgungsleitung nur auf den zweiten Schlitten 7. Der erste Schlitten 1 wird über eine Nebenversorgungsleitung umgesetzt, wobei die Nebenversorgungsleitung mit der Hauptversorgungsleitung energietechnisch und/oder signaltechnisch verbunden ist, jedoch mechanisch nur an den zweiten Schlitten 7 angekoppelt ist. Zudem ist sichergestellt, dass der Übergang von der Nebenversorgungsleitung vom zweiten Schlitten 7 auf den ersten Schlitten 1 möglichst störungsfrei umgesetzt ist. Beispielsweise ist die Nebenversorgungsleitung wesentlich leichter und kürzer als Hauptversorgungsleitung ausgebildet. Dadurch wirken die Störeinflüsse von Hauptversorgungsleitung nicht auf den ersten Schlitten 1, so dass dieser mit einem besonders störungsfreien, ruhigen Lauf durch die Bearbeitungsstation 21 durchfahren kann.

Nach der Bearbeitungsstation 21 erfolgt in gleicher Weise wie vor der Bearbeitungsstation 21 ein Turbo-Beschleunigungsbetriebszustand und ein Turbo-Bremsbetriebszustand.

Der Vorteil dieser Ausgestaltung ist, dass statt eines großen Antriebs zwei kleinere Antriebe verwendet werden können, welche dynamischer sind als der große Antrieb.

Das Geschwindigkeitsprofil II ist als ein Eco-Geschwindigkeitsprofil ausgebildet. Ausgehend von der Beladestation B erfolgt durch eine Momentenkopplung in der Bewegungsrichtung zu der Bearbeitungsstation 21 eine mittlere Geschwindigkeit dadurch, dass beide Antriebe 3, 8 ein mittleres Antriebsmoment umsetzen oder sogar einer der Antriebe deaktiviert wird. Dabei kann insbesondere der zweite Schlitten 7 den ersten Schlitten 1 mit einem Antriebsmoment beschleunigen. Dies entspricht einem Eco-Beschleunigungsbetriebszustand. Vor der Bearbeitungsstation 21 erfolgt ein Abbremsen, wobei beide Antriebe 3, 8 ein mittleres Bremsmoment umsetzen oder sogar einer der Antriebe deaktiviert wird. Dabei kann insbesondere der erste Schlitten 1 den zweiten Schlitten 7 mit einem Bremsmoment abbremsen. Dies entspricht einem Turbo-Bremsbetriebszustand.

Für diesen Übergang kann zum einen eine unidirektionale Momentenkopplung verwendet werden, wobei bei dem Übergang von dem Eco-Beschleunigungsbetriebszustand zu dem Eco-Bremsbetriebszustand das Kopplungsorgan 10 die Endposition in dem Kopplungslangloch 9 wechseln muss. Dies bedeutet einen zusätzlichen Kontrollaufwand und zudem einen gewissen Zeitverlust, jedoch ermöglicht es die Verteilung der Einschaltzeiten für die Bewegung zwischen B und E auf beide Motoren.

Alternativ hierzu kann eine bidirektionale Momentenkopplung verwendet werden, wobei bei einer ersten Variante in dem Eco-Beschleunigungsbetriebszustand die Verriegelungseinrichtung 17 zunächst geöffnet ist bis eine unidirektionale Momentenkopplung gegeben ist und dann erst geschlossen wird. Nach dem Eco-Bremsbetriebszustand wird die Verriegelungseinrichtung 17 wieder geöffnet. Bei einer zweiten Variante wird die Verriegelungseinrichtung 17 bereits in der Beladestation B geschlossen, nachfolgend der Eco-Beschleunigungsbetriebszustand und der Eco-Bremsbetriebszustand umgesetzt, wobei in dem Eco-Bremsbetriebszustand das Kopplungsorgan 10 an dem Endbereich des Kopplungslanglochs 9 anliegt und die Verriegelungseinrichtung 17 unbelastet und damit schneller geöffnet werden kann.

In dem Bereich der Bearbeitungsstation 21 erfolgt wieder ein Präzisionsbetriebszustand, wobei die beiden Schlitten 1, 7 parallel, jedoch mechanisch voneinander entkoppelt Verfahren. Dafür ist zum einen bevorzugt die Verriegelungseinrichtung 17 geöffnet, zum anderen befindet sich das Kopplungsorgan 10 in einem Teilabschnitt der Kurvenbahn 12, welcher parallel zur ersten Achserstreckung A1 ausgerichtet ist. Damit ist die mechanische Kopplung zwischen den Schlitten 1, 7 aufgehoben oder zumindest minimiert.

Nach der Bearbeitungsstation 21 erfolgt in gleicher Weise wie vor der Bearbeitungsstation 21 ein Eco-Beschleunigungsbetriebszustand und ein Eco-Bremsbetriebszustand. Die Nutzung der Eco-Betriebszustände hat den Vorteil, dass der Wärmeeintrag in die Antriebe 3, 8 reduziert werden kann. Insbesondere wenn die Antriebe 3, 8 als Linearmotoren ausgebildet sind, können diese temporär eine höhere Leistung erbringen, welche ich jedoch mit einem Problem im Wärmemanagement verbunden ist. Dieses Problem kann durch die Nutzung der Eco-Betriebszustände eliminiert werden.

Es ist auch möglich, die Eco-Betriebszustände und die Turbo-Betriebszustände zu mischen. So ist es denkbar, dass die Anfahrt zu der Bearbeitungsstation durch Turbo-Betriebszustände und die Abfahrt von der Bearbeitungsstation durch Eco-Betriebszustände erfolgt.

### Bezugszeichenliste

- 1: erster Schlitten
- 2: Roboteranordnung
- 3: erster Antrieb
- 4: A1-Führungswagen
- 5: A1-Führungsschienen (Maßverkörperung)
- 6: Schlittenplatte
- 7: zweiter Schlitten
- 8: zweiter Antrieb
- 9: Kopplungslanglöcher
- 10: Kopplungsorgan
- 11: Kurvenführungsmodul
- 12: Kurvenbahn
- 13: A2-Führungswagen
- 14: A2-Führungsschienen
- 15: Getriebeeinrichtung
- 16: Ausgangsorgan
- 17: Verriegelungseinrichtung
- 18: Exzenterabschnitt
- 19: Stifte
- 20: Fertigungsanlage
- 21: Bearbeitungsstation
- A1: erste Achserstreckung
- A2: zweite Achserstreckung
- A: aktive Zustand
- IA: inaktiven Zustand
- B: Beladestation
- E: Entladestation

## Patentansprüche

1. Roboteranordnung (2)
mit einem ersten Schlitten (1), wobei der erste Schlitten (1) einen ersten Antrieb (3) aufweist, um den ersten Schlitten (1) entlang einer ersten Achserstreckung (A1) zu verfahren,
mit einem zweiten Schlitten (7), wobei der zweite Schlitten (7) einen zweiten Anrieb aufweist, um den zweiten Schlitten (7) entlang der ersten Achserstreckung (A1) zu verfahren,
wobei der ersten und der zweite Schlitten (7) in einem ersten Betriebszustand unabhängig voneinander und/oder relativ zueinander entlang der ersten Achserstreckung verfahrbar sind,
mit einer Getriebeeinrichtung (15) , wobei die Getriebeeinrichtung (15) ein erstes und ein zweites Eingangsorgan und ein Ausgangsorgan (16) aufweist, wobei das erste Eingangsorgan mit dem ersten Schlitten (1) und das zweite Eingangsorgan mit dem zweiten Schlitten (7) wirkverbunden ist und
wobei die Getriebeeinrichtung (15) ausgebildet ist, bei einer Relativbewegung entlang der Achserstreckung (A1) der Schlitten (1, 7) das Ausgangsorgan (16) in eine zweite Achserstreckung (A2) zu verschieben,
mit einer Steuerungseinrichtung zur Steuerung des ersten und des zweiten Antriebs (8),
**dadurch gekennzeichnet, dass**
die Steuerungseinrichtung ausgebildet ist, in einem zweiten Betriebszustand, wobei die Schlitten (1, 7) zumindest in einer Bewegungsrichtung miteinander momentengekoppelt sind, den ersten und den zweiten Antrieb (8) so anzusteuern, dass von dem einen Schlitten (1) auf den anderen Schlitten (7) ein Antriebsmoment oder ein Bremsmoment übertragen wird.

2. Roboteranordnung (2) nach einem der vorhergehenden Ansprüche, **dadurch gekennzeichnet, dass** diese mindestens eine A1-Führungsschiene (5) und/oder eine Maßverkörperung und/oder einen Stator aufweist, wobei die A1-Führungsschiene (5) und/oder die Maßverkörperung und/oder der Stator dem ersten und dem zweiten Schlitten (7) zugeordnet ist bzw. sind.

3. Roboteranordnung (2) nach einem der vorhergehenden Ansprüche, **dadurch gekennzeichnet, dass** der zweite Betriebszustand als eine unidirektionale Momentenkopplung ausgebildet ist.

4. Roboteranordnung (2) nach einem der vorhergehenden Ansprüche, **dadurch gekennzeichnet, dass** der erste und der zweite Schlitten (7) unmittelbar und/oder über einen passiven Auffahrabschnitt miteinander gekoppelt sind.

5. Roboteranordnung (2) nach einem der vorhergehenden Ansprüche, **dadurch gekennzeichnet, dass** die Schlitten (1, 7) über eine abstandsändernde Koppeleinrichtung miteinander gekoppelt sind, um den Abstand zwischen den Schlitten (1, 7) einzustellen

6. Roboteranordnung (2) nach einem der vorhergehenden Ansprüche, **dadurch gekennzeichnet, dass** der zweite Betriebszustand als eine bidirektionale Momentenkopplung ausgebildet ist.

7. Roboteranordnung (2) nach einem der vorhergehenden Ansprüche, **dadurch gekennzeichnet, dass** die Schlitten (1, 7) über eine Verriegelungseinrichtung (17) verbunden sind, wobei die Schlitten (1, 7) durch die Verriegelungseinrichtung (17) in beide Bewegungsrichtungen der ersten Achserstreckung (A1) momentengekoppelt sind.

8. Roboteranordnung (2) nach einem der vorhergehenden Ansprüche, **dadurch gekennzeichnet**, dassdie Schlitten (1, 7) über die Getriebeeinrichtung (15) miteinander momentengekoppelt sind.

9. Roboteranordnung (2) nach einem der vorhergehenden Ansprüche, **dadurch gekennzeichnet, dass** die Getriebeeinrichtung (15) als eine Kurvengetriebeeinrichtung ausgebildet ist.

10. Roboteranordnung (2) nach einem der vorhergehenden Ansprüche, **dadurch gekennzeichnet, dass** die Kurvenbahn (12) mindestens einen Teilabschnitt, aufweist, wobei der Teilabschnitt gleichgerichtet und/oder parallel zu der ersten Achserstreckung (A1) ist.

11. Roboteranordnung (2) nach einem der vorhergehenden Ansprüche, **dadurch gekennzeichnet, dass** einer der Schlitten (1) das Ausgangsorgan (16) in der zweiten Achserstreckung (A2) führt und dass der andere Schlitten (7) eine Versorgungsleitung trägt.

12. Roboteranordnung (2) nach einem der vorhergehenden Ansprüche, **dadurch gekennzeichnet, dass** die Steuerungseinrichtung ausgebildet ist,
- einen Beschleunigungsbetriebszustand anzusteuern, wobei in Fahrtrichtung ein Antriebsmoment von dem hinteren Schlitten auf den vorderen Schlitten übertragen wird,
und/oder
- einen Bremsbetriebszustand anzusteuern, wobei in Fahrtrichtung ein Bremsmoment von dem vorderen Schlitten auf den hinteren Schlitten übertragen wird;
und/oder
- einen Präzisionsbetriebszustand anzusteuern, wobei die beiden Schlitten (1, 7) ungekoppelt fahren.

13. Fertigungsanlage (20), **gekennzeichnet durch** eine Roboteranordnung (2) nach einem der vorhergehenden Ansprüche.

14. Fertigungsanlage (20) nach Anspruch 13, **dadurch gekennzeichnet, dass** diese mindestens zwei der Roboteranordnungen (2) aufweist, wobei die Roboteranordnungen (2) für einen Umlaufbetrieb angeordnet sind.

15. Verfahren zum Betreiben der Roboteranordnung (2) nach einem der Ansprüche 1 bis 12 und/oder der Fertigungsanlage (20) nach Anspruch 13 oder 14, **dadurch gekennzeichnet, dass** diese in dem Beschleunigungszustand, wobei in Fahrtrichtung ein Antriebsmoment von dem hinteren Schlitten auf den vorderen Schlitten übertragen wird, und/oder in dem Bremsbetriebszustand, wobei in Fahrtrichtung ein Bremsmoment von dem vorderen Schlitten auf den hinteren Schlitten übertragen wird, betrieben wird.
